(19)

Europäisches
Patentamt
European
Patent Office
Office européen
des brevets

(11) **EP 2 175 655 A2**

(12) **EUROPEAN PATENT APPLICATION**

(43) Date of publication:
**14.04.2010 Bulletin 2010/15**

(51) Int Cl.:
*H04N 7/26* (2006.01)          *H04N 7/50* (2006.01)

(21) Application number: **09011071.9**

(22) Date of filing: **28.08.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **11.09.2008 EP 08016017**

(71) Applicant: **Siemens Aktiengesellschaft**
**80333 München (DE)**

(72) Inventor: **Li, Xiang**
**100080 Haisian District**
**Beijing (CN)**

(54) **Rate-distortion optimisation for rate-control in multi-layered video coding**

(57)     The invention relates to a method and a device for video coding, in particular to rate-distortion optimization for rate-control in multi-layered video coding. It results in a low complex method and in a high compression ratio. The invention is to be used in video coding units, e.g. for a video retrieval system such as Internet TV.

FIG 2

EP 2 175 655 A2

**Description**

The invention relates to a method and a device for video coding, in particular to rate-distortion optimization for rate-control in multi-layered video coding.

H.264 SVC extension is the Scalable Video Coding (SVC) extension of H.264/AVC (AVC - Advanced Video Coding). Currently, it supports three kinds of scalability, i.e. temporal scalability, spatial scalability and quality scalability. When compared with the scalable profiles in previous video coding standards, the overall coding efficiency of H.264 SVC extension has been greatly increased. Nevertheless, there is much room for further improvement since in normal cases the gap in rate-distortion performance to single layer coding is still big [1].

In principle, the key technology distinguishing SVC from single layer coding is the inter-layer prediction which is designed to remove the redundancies between layers, e.g. between base and enhancement layer. Intuitively there is a need to improve the coding efficiency of SVC towards that of single layer coding.

The documents [2, 3, 4] propose novel methods to improve the efficiency of inter-layer prediction in spatial scalability. Basically, their ideas are to increase the accuracy of the prediction by further exploring the correlation between layers. Although the gains by the proposed algorithms are significant, their limitation is obvious. By assuming a fixed base layer, they try to independently optimize the enhancement layer and neglect the affection by the base layer. Intuitively, how to code the base layer will greatly influence the coding efficiency of the enhancement layer.

Recently, multi-layer rate-distortion optimization (RDO) algorithms were proposed [5, 6]. By simultaneously considering both base layer and enhancement layer, the MB (MB - macroblock) modes, motion vectors, quantized residues and even the coding control parameters, such as the Lagrange multiplier in rate-distortion optimization process, are well selected to benefit the inter layer prediction. Simulations show that the performance of these algorithms is very good. However, the computational complexity by these algorithms is very high since normally a multi-pass or even an iterative process has to be employed to enable the multi-layer optimization [5, 6].

Therefore it is an object of this invention to provide a method and a device that improves the coding efficiency while keeping a reasonable computational complexity when coding a video by a base and at least one enhancement layer.

The object is solved by a method for coding a macroblock of a picture of an uncoded video stream to a coded video stream , whereby a rate-distortion optimization for coding the macroblock by an base-layer n and by at least one enhancement layer n+1 is performed, comprising:

- Setting a cost function $C_n$ for the base layer n in the form of

$$C_n\left(\Gamma_n^m\right) = D_n\left(\Gamma_n^m\right) + \lambda_n \cdot R_n\left(\Gamma_n^m\right)$$

and a cost function $C'_{n+1}$ for the enhancement layer n+1 in the form of

$$C'_{n+1}\left(\Gamma_{n+1}^m\middle|\Gamma_n^m\right) = D_{n+1}\left(\Gamma_{n+1}^m\middle|\Gamma_n^m\right) + \lambda_{n+1} \cdot R_{n+1}\left(\Gamma_{n+1}^m\middle|\Gamma_n^m\right)$$

whereby the following symbols represent:

| | |
|---|---|
| m, n: | m-th macroblock, n-th layer; |
| | a respective set of the coding parameters covering macroblock mode, motion vector and quantized residue; |
| $D_n(.), D_{n+1}(.)$: | distortion function; |
| $R_n(.), R_{n+1}(.)$: | rate function; |
| $\lambda_n, \lambda_{n+1}$: | Lagrange multiplier; |
| $(.|.)$: | Conditional probability |

- Generating the set $\Gamma_n^m$ of coding parameters for the base layer n by minimizing the cost functions $C_n$, $C'_{n+1}$ such as

$$\Gamma_n^m = \underset{\left\{\Gamma_n^m, \Gamma_{n+1}^m \middle| \Gamma_n^m\right\}}{\arg\min} \left\{(1-w)C_n\left(\Gamma_n^m\right) + w \cdot C_{n+1}'\left(\Gamma_{n+1}^m \middle| \Gamma_n^m\right)\right\}$$

whereby $w \in ]0;1]$ represents a weighting factor;

- Coding the macroblock in the base layer n with the set $\Gamma_n^m$ of coding parameters.

This method uses a Lagrange cost function to generate an optimum in rate and distortion when coding the macroblock. In addition it also takes multi-layer coding properties into account when defining the optimum by minimizing the Lagrange cost function. Further on it also reduces computation complexity by a simplified approach to generate the set of coding parameters for the base layer.

The standard H.264 SVC extension gives further details about the MB mode in section 7.4.5 "Macroblock Layer Semantics" and 7.4.5.2 "Sub-macroblock Prediction Semantics". The mentioned standard uses the terms macroblock type and sub macroblock type for the term MB mode. In addition the mentioned paragraphs also give definitions for the term motion vector.

This method can be enhanced by the following steps:

- Assigning the identical macroblock mode and the identical motion vector $(M_n^m, M_{n+1}^m)$ $M_n^m = M_{n+1}^m$ to the base layer n and to the enhancement layer n+1;

- Generating an updated cost function $C_{n+1}'$ for the enhancement layer n+1 in the form of

$$C_{n+1}'\left(\Gamma_{n+1}^m \middle| \overline{\Gamma_n^m}\right) = D_{n+1}(\Theta) + \lambda_{n+1} \cdot R_{n+1}(\Theta)$$

whereby the following symbols represent:

$$\Theta = \left\{M_n^m, \left(I^m - \hat{I}_n^m\right) \middle/ Q_{n+1}\middle|\left(M_n^m, r_n^m\right)\right\}$$

$I^m$:      the $m^{th}$ macroblock of the picture of the uncoded video stream to be coded;

$\hat{I}_n^m$ :      a reconstructed $m^{th}$ macroblock of the $m^{th}$ macroblock in the base layer n;

$Q_{n+1}$:      a quantization step in the enhancement layer n+1;

These steps reduce the computational complexity dramatically by resolving inter-layer dependencies in the updated cost function, whereby the updated cost function still generates results in the nearby optimum.

Finally a device is presented that covers means for performing the steps according to the presented at least one method. The means are implemented in software and run on a computer or a general-purpose processor. In an alternative the means are realized by hardware or by a combination of hard- and software. The device may be part in a video coding engine that distributes video content to terminals via the Internet by IP/UDP (IP- Internet Protocol, UDP- User Datagram Protocol) or via mobile channels, e.g. via UMTS (UMTS - Universal Mobile Telephone System).

A one-pass multi-layer rate-distortion optimization for H.264 SVC extension quality scalable video coding is presented. Instead of checking the impact of the base layer on the enhancement layer after the real coding, the affection is estimated so that the multi-pass process in multi-layer RDO is avoided and so is the heavy computational payload. Moreover, the optimization on residues is also improved to benefit inter-layer prediction. Simulations show that the proposed algorithm outperforms the most recent H.264 SVC extension reference software JSVM 9.13.1. A gain of 0.35 dB on average and 0.75 dB at maximum is achieved for eight sequences at a cost of less than 8% increase of the total coding time.

The invention and its improvements are described by the following figure:

Figure 1    shows simulation results for the reference software and multi-layer coding taking the in- vention into.

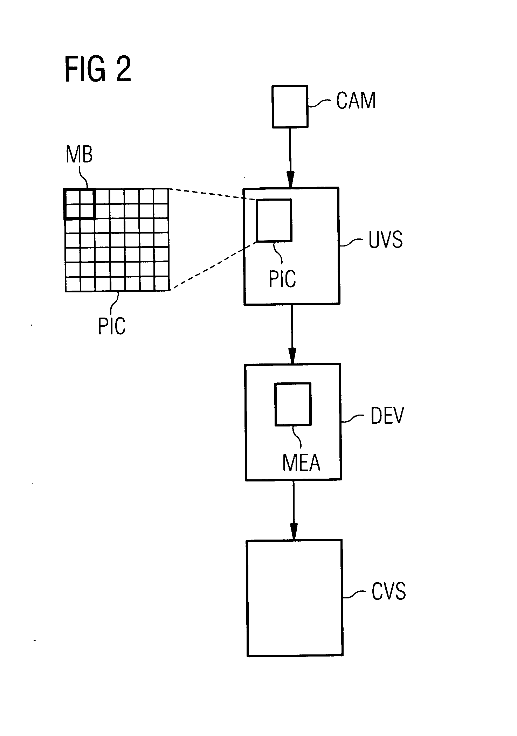

Figure 2    shows a device for performing the method steps of the invention.

A camera CAM delivers one or several pictures PIC that represent an uncoded video stream UVS. Each picture is portioned into blocks, whereby 2x2 blocks form a macroblock MB. Each block may cover 16x16 pixels for example. In scalable video coding a macroblock is coded by a base layer n and at least one enhancement layer n+1. The base layer represents the macroblock in a base image quality. The enhancement layer adds additional information to the base layer and results in an improved image quality for a given macroblock.

In the H.264 SVC extension (SVC - Scalable Video Quality) reference software JSVM 9.13.1 [7] each layer is optimized independently. For a set $\Gamma_n^m$ of coding parameters, including MB mode, motion vectors and quantized residues, of the $m^{th}$ marcoblock MB in $n^{th}$ layer, a rate distortion (R-D) cost-function $C_n\left(\Gamma_n^m\right)$ is defined as

$$C_n\left(\Gamma_n^m\right) = D_n\left(\Gamma_n^m\right) + \lambda_n \cdot R_n\left(\Gamma_n^m\right) \qquad (1)$$

where $D_n(\cdot)$ and $R_n(\cdot)$ denote the distortion and rate for the $n^{th}$ layer, respectively, $\lambda_n$ is the Lagrange multiplier that is currently determined by quantization parameter though a better performance can be expected by an adaptive algorithm.

The best set $\Gamma_n^m$ can be determined for the single layer by optimizing the Lagrange cost function of (1) by

$$\Gamma_n^m = \arg\min_{\left(\Gamma_n^m\right)}\left\{C_n\left(\Gamma_n^m\right)\right\} \qquad (2)$$

To count the impact of the base layer coding on the enhancement layer, document [5] proposes a conditional R-D cost for the enhancement layer in a two-layer scenario, such as

$$\begin{aligned}C_{n+1}\left(\Gamma_{n+1}^m\middle|\Gamma_n^m\right) &= D_{n+1}\left(\Gamma_{n+1}^m\middle|\Gamma_n^m\right) \\ &+ \lambda_{n+1}\left(R_n\left(\Gamma_n^m\right) + R_{n+1}\left(\Gamma_{n+1}^m\middle|\Gamma_n^m\right)\right)\end{aligned} \qquad (3)$$

Consequently, the best set $\Gamma_n^m$ is selected by the joint R-D cost minimization such as

$$\Gamma_n^m = \arg\min_{\left\{\Gamma_n^m,\Gamma_{n+1}^m\middle|\Gamma_n^m\right\}}\left\{(1 - w)C_n\left(\Gamma_n^m\right) + w \cdot C_{n+1}\left(\Gamma_{n+1}^m\middle|\Gamma_n^m\right)\right\} \qquad (4)$$

A parameter $w \in [0;1]$ is a weighting factor which controls the trade-off between the optimization for base layer and enhancement layer. On one hand, when w is equal 0, the optimization reduces to the single RDO (RDO - Rate-Distortion Optimization). On the other hand, w equaling 1 indicates the base layer is only optimized for the enhancement layer coding without considering the reconstruction quality of the base layer as described in [5]. In order to support an optimization taking for base and enhancement layer in to account a parameter setting $w \in ]0;1]$ should be used.

To reflect the accumulated rate for the enhancement layer the term $R_n\left(\Gamma_n^m\right)$ is included in equation (3). On the one hand this term makes equation (4) not symmetric. In contrast to the case of w = 0, a single layer RDO at least in form, is also expected for w = 1. While with this term, equation (4) is still a multi-layer RDO since the rate for base layer has to been considered all the time even when w = 1. Second, when extend (4) to the scenario of more than two layers, counting the accumulated rate for all lower layers in RDO is less efficient since it will actually force a preference on the coding parameters with lower rate while sacrificing the quality. Therefore, the term $R_n\left(\Gamma_n^m\right)$ is removed in equation (3), (4) and the revise the R-D cost function for the enhancement layer can be written as

$$C'_{n+1}\left(\Gamma_{n+1}^m\Big|\Gamma_n^m\right) = D_{n+1}\left(\Gamma_{n+1}^m\Big|\Gamma_n^m\right)$$
$$+ \lambda_{n+1} \cdot R_{n+1}\left(\Gamma_{n+1}^m\Big|\Gamma_n^m\right) \qquad (5)$$

Replacing $C_{n+1}\left(\Gamma_{n+1}^m\Big|\Gamma_n^m\right)$ in equation (4) with $C'_{n+1}\left(\Gamma_{n+1}^m\Big|\Gamma_n^m\right)$, the proposed multi-layer RDO is formulated as

$$\Gamma_n^m = \underset{\left\{\Gamma_n^m,\Gamma_{n+1}^m\Big|\Gamma_n^m\right\}}{\arg\min}\left\{(1-w)C_n\left(\Gamma_n^m\right) + w \cdot C'_{n+1}\left(\Gamma_{n+1}^m\Big|\Gamma_n^m\right)\right\} \quad (6)$$

Equation (6) results in a set of coding parameters that are to be used for coding the macroblock MB to form the coded video stream CVS. Equation (6) theoretically leads to an optimal solution. In addition it also reduces computation complexity by a simplified approach to generate the set of coding parameters for the base layer.

An improvement of the invention will be described in the following. Equation (6) still shows even for a two-layer case some computational complexity, the product space by $\Gamma_n^m$ and $\Gamma_{n+1}^m$ is so huge that the corresponding computation payload is very high.

A great simplification was achieved as described in document [9]. The computational complexity is still very high since a multi-pass or even iterative coding is necessary for obtaining $C'_{n+1}\left(\Gamma_{n+1}^m\Big|\Gamma_n^m\right)$.

Multi-pass coding is necessary for the calculation of $C'_{n+1}\left(\Gamma_{n+1}^m\Big|\bar{\Gamma}_n^m\right)$, because of the dependency introduced by inter-layer prediction. Intuitively, the computational complexity will be greatly reduced if such a kind if dependency can be broken.

Currently in H.264 SVC extension, there are three inter-layer prediction techniques, i.e. inter-layer motion prediction (based on MB mode and motion information), interlayer residual prediction (based on quantized residues) and inter-layer intra prediction (based on full reconstruction of the base layer). Since the full construction may be regarded as a special combination of motion and residues, $\Gamma_n^m$ can be replaced by the MB mode and motion information, both represented by $M_n^m$, plus quantized residues $r_n^m$, namely

$$\Gamma_n^m = \left( M_n^m, r_n^m \right) \tag{7}$$

In order to reduce complexity of the MB mode and motion information $M_{n+1}^m$ of the enhancement layer it is set equal to the best MB mode and best motion information $M_n^m$ of the base layer. This results in a very little error especially when the quantization gap between the two layers is not big. Therefore

$$\Gamma_{n+1}^m \Big| \Gamma_n^m = \left( M_{n+1}^m, r_{n+1}^m \right)\left( M_n^m, r_n^m \right)$$
$$= \left( M_n^m, r_{n+1}^m \right)\left( M_n^m, r_n^m \right) \tag{8}$$

For the quantized residues $r_{n+1}$ in H.264/SCV quality scalable video coding, they are derived as

$$r_{n+1}^m = \left( I^m - P_{n+1}^m - r_n^m \cdot Q_n \right) / Q_{n+1} \tag{9}$$

where $I^m$ is the source macroblock of the uncoded video stream, $P_{n+1}^m$ denotes the inter or intra prediction for the $m^{th}$ macroblock from the same layer, $Q_n$ and $Q_{n+1}$ represent the quantization steps for base layer and enhancement layer and $r_n^m \cdot Q_n$ indicates the residual prediction from the reference layer. Considering the reconstruction $\hat{I}_n^m$ the macroblock m in the base layer,

$$\hat{I}_n^m = P_n^m + r_n^m \cdot Q_n \tag{10}$$

$\left( P_{n+1}^m + r_n^m \cdot Q_n \right)$ in equation (9) may be approximately replaced by $\hat{I}_n^m$ since $P_{n+1}^m$ should be similar to or slightly better than $P_n^m$ in quality scalable video coding when the gap between $Q_{n+1}$ and $Q_n$ is not big. Consequently, equation (8) is further simplified to

$$\Gamma_{n+1}^m \Big| \Gamma_n^m \approx ( M_n^m, ( I^m - \hat{I}_n^m ) / Q_{n+1} \big| ( M_n^m, r_n^m ) \tag{11}$$

Physically, the right hand of equation (11) indicates that the MB mode as well as the motion information of the enhancement layer is the same as those in the base layer, while the residues are the difference between the source macroblock and the reconstruction of the base layer. Note that terms representing the coding parameters from the $(n+1)^{th}$

layer disappear in the right hand of equation (11), which indicates the dependency resulted from interlayer prediction is broken. Accordingly, it is a big advantage of this improvement of the invention that the multi-pass coding is not necessary any more.

Plugging equation (11) into equation (5), the R-D cost function for the enhancement layer is derived as

$$
\begin{aligned}
C'_{n+1}(I^m_n \mid I^m_n \approx D_{n+1}\left(M^m_n, \left(I^m - \hat{I}^m_n\right) \mid \left(M^m_n, r^m_n\right)\right) \\
+ \lambda_{n+1} \cdot R'_{n+1}\left(\left(M^m_n, \left(I^m - \hat{I}^m_n\right) / Q_{n+1}\right) \mid \left(M^m_n, r^m_n\right)\right)
\end{aligned}
\tag{12}
$$

Whereby $R'_{n+1}(\cdot)$ denotes the residual rate in $(n+1)^{th}$ layer. In fact, assuming that $M^m_{n+1}$ is the same with $M^m_{n+1}$ indicates it can be perfectly predicted by inter-layer motion prediction. Therefore, only the part for residues should be counted for the rate of enhancement layer.

Basically, when setting equation (12) into equation (6), the proposed simplified MB mode decision method can be formulated. For the implementation, the MB mode with the minimal joint R-D cost should be selected as the best MB mode for the base layer.

When extending equation (6) to the scenario of more than two layers, a process like sliding window should be applied. That is for each layer, only its very enhancement layer and itself should be considered in (6) since the correlation between two non-neighboring layers is normally quite weak.

In both H264/AVC reference software JM 14.1 [8] and H.264 SVC extension reference software JSVM 9.13.1 [7], there is a small module for the optimization on residues. The basic idea is to save bits by discarding small but expensive non-zero quantized residues. In practice, it checks the cost of each quantized residue where the cost is empirically predefined according to the amplitude and position of the quantized residue. If the accumulated cost for a 4x4 or 8x8 block is smaller than a certain value, the whole block will be discarded by forcing all residues to zero.

Generally, this optimization is very efficient for single layer coding. However, for multi-layer coding, its performance is not good since the residues may be used in inter-layer residual prediction. Discarding a whole block may reduce the rate for base layer, but will also degrade the performance of the enhancement layer since zeros contribute nothing in prediction.

To improve the inter-layer residual prediction, some small residues should be kept from zeros. Here a simple but efficient method is proposed for the optimization on residues in multi-layer coding. That is, the initial cost for a block is set to 3 instead of 0. By this approach, more small residues are kept to profit the residual prediction while the real "expensive" coefficients can be avoided as well.

The invention was verified on the most recent H.264 SVC extension reference software JSVM 9.13.1 [7]. Totally eight sequences defined in testing conditions for SVC coding efficiency were coded on an Intel Xeon (X5355@2.66 GHz) PC with MS Windows Server 2003 R2 and 6 GB memory. To focus on quality scalability, temporal scalability was disabled by setting the GOP size to 1. To evaluate the algorithm in a similar quality range to that in [5], four quality layers were enabled with fixed quantization parameters, i.e QP= 32, 30, 28, 26. All the frames of each sequence were encoded in IPPP structure (only one I frame at the very beginning). Besides, CABAC, fast search algorithm for motion estimation were enabled while 8x8 transform, low complexity MB mode and MGS vector were disabled [7].

**Table 1. Simulation Result**

| sequences | $\omega = 0.25$ | | $\omega = 0.5$ | | $\omega = 0.75$ | |
|---|---|---|---|---|---|---|
| | ΔP(dB) | ΔT | ΔP(dB) | ΔT | ΔP(dB) | ΔT |
| bus | 0.23 | 6,87% | 0.32 | 6,02% | 0.29 | 5,69% |
| football | 0.12 | 9,89% | 0.23 | 10,33% | 0.20 | 9,89% |
| foreman | 0.25 | 6,28% | 0.40 | 5,91% | 0.44 | 4,79% |
| mobile | 0.25 | 7,83% | 0.34 | 7,83% | 0.28 | 7,83% |
| city | 0.26 | 7,61% | 0.44 | 7,23% | 0.49 | 7,04% |
| crew | 0.27 | 7,92% | 0.33 | 9,78% | 0.29 | 9,34% |
| harbour | 0.24 | 7,55% | 0.34 | 7,55% | 0.31 | 7,55% |
| soccer | 0.24 | 6,00% | 0.40 | 4,99% | 0.42 | 4,33% |
| Average | 0.23 | 7,49% | 0.35 | 7,38% | 0.34 | 7,06% |

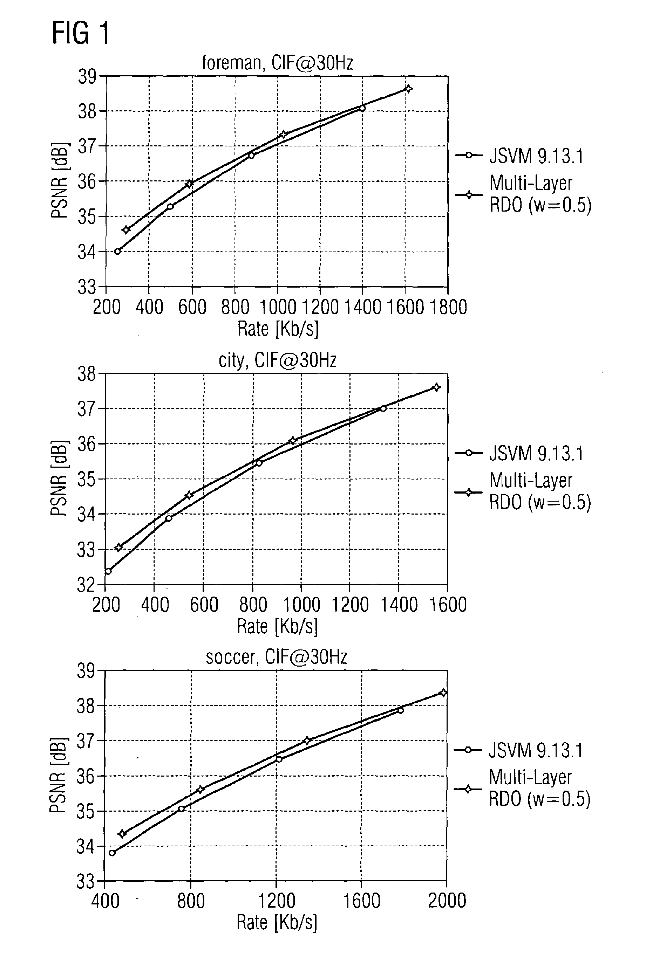

Table 1 summaries the simulation results for different ω where ΔP denotes the gain over JSVM 9.13.1 for luma signal in BD-PSNR (BD-PSNR= Bjontegaard Delta Peek Signal-to-Noise Ratio), ΔT represents the increase of the total coding time. In addition, three related R-D curves are drawn in Figure 1. In line with document [5] ω=0.5 shows a better overall performance. Therefore, we focus on this case for this case for the following discussions.

On overage, a gain of 0.35 dB was achieved for eight sequences at a cost of less than 8% increase of the total coding time. Moreover, except the 0.23 dB, which indicates the proposed algorithm is able to well adapt to different scenarios.

In fact, more significant peak gains can be observed from Figure 1. For foreman and city, more than 0.75 dB gains can be noticed around 300 Kb/s and 250 Kb/s, respectively. For soccer, about 0.6 dB gain around 450 Kb/s happens to be similar to that in [5]. While at the same time, the computational complexity is much lower, i.e. the total coding time is increased by only 4.99% for soccer. It should be noted that the quality scalability in document [5] is not obtained by six real quality layers. Instead, it is achieved by successively discarding quality enhancement representations of the B frames starting with the finest temporal level. Although this approach is also a practical way for quality scalability, a serious PSNR fluctuation may be observed.

Generally, the proposed algorithm and its improvements achieve a lower distortion at the cost of a slightly higher rate. This is because MB modes and residues with lower distortion are selected to benefit inter-layer prediction. Consequently, the overall coding efficiency is improved and a better performance over JSVM 9.13.1 is observed.

Finally a device is presented that covers means for performing the steps according to the presented at least one method. The means are implemented in software and run on a computer or a general-purpose processor. In an alternative the means are realized by hardware or by a combination of hard- and software. The device may be part in a video coding engine that distributes video content to terminals via the Internet by IP/UDP (IP- Internet Protocol, UDP- User Datagram Protocol) or via mobile channels, e.g. via UMTS (UMTS - Universal Mobile Telephone System).

References

[1] H.-C. Huang, W.-H. Peng, T. Chiang, and H..M. Hang, "Advances in the scalable amendment of H.264/AVC," IEEE Commun. Mag., vol. 45, no. 1, pp. 68-76, 2007

[2] W. Yang, G. Rath, and C. Guillemot, "Scalable video coding with interlayer signal decorrelation techniques," EUROSIP J. Advances in Signal Process., vol. 2007, pp. Article ID 54342, 15, 2007

[3] R. Zhang and M.L. Comer, "Improved motion compensation in the enhancement layer for spatially scalable video coding," in IEEE Int. Conf. on Image Process. (ICIP), 2007, pp. II-301-II-304

[4] R. Xiong, J. Xu, and F. Wu, "In-scale motion compensation for spatially scalable video coding," IEEE Trans. Circuits Syst. Video Technol., vol. 18, no. 2, pp. 145-158, 2008

[5] H. Schwarz and T. Wiegand, "R-D Optimized Multi-Layer Encoder Control for SVC," in IEEE Int. Conf. on Image Process. (ICIP), 2007, pp. II-281-II-284.

[6] H. Roodaki, H.R. Rabiee, and M. Ghanbari, "Performance enhancement of H.264 codec by layered coding," in IEEE Int. Conf. on Acoustics, Speech, and Signal Process., (ICASSP), 2008, pp. 1145-1148

[7] JVT, "H.264 SVC extension reference software (JSVM 9.13.1) and manual," cvs sever at garcon.ient.rwth-aachen.de, Jul. 2008

[8] JVT, "H.264/AVC reference software (JM14.1)," http://iphome.hhi.de/suehring/tml/, Jul. 2008

**Claims**

1. A method for coding a macroblock (MB) of a picture (PIC) of an uncoded video stream (UVS) to a coded video stream (CVS), whereby a rate-distortion optimization (R-D) for coding the macroblock (MB) by an base-layer (n) and by at least one enhancement layer (n+1) is performed, comprising:

    - Setting a cost function $C_n$ for the base layer (n) in the form of

$$C_n\left(\Gamma_n^m\right) = D_n\left(\Gamma_n^m\right) + \lambda_n \cdot R_n\left(\Gamma_n^m\right)$$

and a cost function $C'_{n+1}$ for the enhancement layer (n+1) in the form of

$$C'_{n+1}\left(\Gamma_{n+1}^m\Big|\Gamma_n^m\right) = D_{n+1}\left(\Gamma_{n+1}^m\Big|\Gamma_n^m\right) + \lambda_{n+1} \cdot R_{n+1}\left(\Gamma_{n+1}^m\Big|\Gamma_n^m\right)$$

whereby the following symbols represent:

m, n: m-th macroblock, n-th layer;

$\Gamma_n^m, \Gamma_{n+1}^m$ : a respective set of the coding parameters covering macroblock mode, motion vector and quantized residue;
$D_n(.), D_{n+1}(.)$: a respective distortion function;
$R_n(.), R_{n+1}(.)$: a respective rate function;
$\lambda_n, \lambda_{n+1}$: a respective Lagrange multiplier;
$(.|.)$: Conditional probability

- Generating the set $(\Gamma_n^m)$ of coding parameters for the base layer (n) by minimizing the cost functions $C_n$, $C'_{n+1}$ such as

$$\Gamma_n^m = \arg\min_{\left\{\Gamma_n^m, \Gamma_{n+1}^m\Big|\Gamma_n^m\right\}}\left\{(1 - w)C_n\left(\Gamma_n^m\right) + w \cdot C'_{n+1}\left(\Gamma_{n+1}^m\Big|\Gamma_n^m\right)\right\}$$

whereby $w \in \,]0;1]$ represents a weighting factor;

- Coding the macroblock (MB) in the base layer (n) with the set $(\Gamma_n^m)$ of coding parameters.

2. A method as claimed in claim 1 further comprising:

- Assigning the identical macroblock mode and the identical motion vector $(M_n^m, M_{n+1}^m)$ $M_n^m = M_{n+1}^m$ to the base layer (n) and to the enhancement layer (n+1);
- Generating an updated cost function $C_{n+1}$ for the enhancement layer (n+1) in the form of

$$C_{n+1}\left(\Gamma_{n+1}^m\Big|\Gamma_n^m\right) = D_{n+1}(\Theta) + \lambda_{n+1} \cdot R_{n+1}(\Theta)$$

whereby the following symbols represent:

$$\Theta = \left\{M_n^m, \left(I^m - \hat{I}_n^m\right)/Q_{n+1}\right\}\left\{M_n^m, r_n^m\right\}$$

$I^m$: the $m^{th}$ macroblock of the picture of the uncoded video stream to be coded;

$\hat{I}_n^m$ : a reconstructed $m^{th}$ macroblock of the $m^{tn}$ macroblock in the base layer (n) of the picture;

$Q_{n+1}$: a quantization step in the enhancement layer (n+1);

3. A device (DEV) comprising:

Means (MEA) for performing the steps according to one of the claims 1 or 2.

## FIG 1

foreman, CIF@30Hz

city, CIF@30Hz

soccer, CIF@30Hz

## FIG 2

CAM

MB

PIC

UVS

PIC

MEA

DEV

CVS

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H.-C. Huang ; W.-H. Peng ; T. Chiang ; H..M. Hang.** Advances in the scalable amendment of H.264/AVC. *IEEE Commun. Mag.,* 2007, vol. 45 (1), 68-76
- **W. Yang ; G. Rath ; C. Guillemot.** Scalable video coding with interlayer signal decorrelation techniques. *EUROSIP J. Advances in Signal Process.,* 2007, 15
- **R. Zhang ; M.L. Comer.** Improved motion compensation in the enhancement layer for spatially scalable video coding. *IEEE Int. Conf. on Image Process,* 2007, II-301-II-304
- **R. Xiong ; J. Xu ; F. Wu.** In-scale motion compensation for spatially scalable video coding. *IEEE Trans. Circuits Syst. Video Technol.,* 2008, vol. 18 (2), 145-158
- **H. Schwarz ; T. Wiegand.** R-D Optimized Multi-Layer Encoder Control for SVC. *IEEE Int. Conf. on Image Process,* 2007, II-281-II-284
- **H. Roodaki ; H.R. Rabiee ; M. Ghanbari.** Performance enhancement of H.264 codec by layered coding. *IEEE Int. Conf. on Acoustics, Speech, and Signal Process,* 2008, 1145-1148
- H.264 SVC extension reference software (JSVM 9.13.1) and manual. garcon.ient.rwth-aachen.de. July 2008
- *H.264/AVC reference software (JM14.1),* July 2008, http://iphome.hhi.de/suehring/tml/